(19) Europäisches Patentamt
European Patent Office
Office européen des brevets

(11) Publication number: 0 540 986 A1

# (12) EUROPEAN PATENT APPLICATION

(21) Application number: **92118349.7**

(22) Date of filing: **27.10.92**

(51) Int. Cl.5: **C08L 33/24**, C08L 63/00, C08L 87/00, //(C08L33/24,63:00, 101:00),(C08L87/00,101:00)

(30) Priority: **28.10.91 JP 281301/91**

(43) Date of publication of application: **12.05.93 Bulletin 93/19**

(84) Designated Contracting States: **DE FR GB IT NL**

(71) Applicant: **SUMITOMO CHEMICAL COMPANY, LIMITED**
**Kitahama 4-chome 5-33**
**Chuo-ku Osaka 541(JP)**

(72) Inventor: **Date, Shinji**
**3-9-7-201, Kurosuna, Inage-ku**
**Chiba-shi, Chiba-ken(JP)**
Inventor: **Koyama, Teruhisa**
**3-9-6-302, Kurosuna, Inage-ku**
**Chiba-shi, Chiba-ken(JP)**

(74) Representative: **Vossius & Partner**
**Siebertstrasse 4 P.O. Box 86 07 67**
**W-8000 München 80 (DE)**

## (54) Thermoplastic resin composition.

(57) A thermoplastic resin composition containing (A) 1 to 99 parts by weight of a resin mixture which contains (a) 1 to 99 % by weight of a glutarimide copolymer comprising 5 to 99.9 % by mole of repeating units derived from glutarimide, 0.1 to 10 % by mole of repeating units derived from an acid and/or acid anhydride and 0 to 94.9 % by mole of repeating units derived from an $\alpha,\beta$-ethylenically unsaturated monomer, and (b) 99 to 1 % by weight of an epoxy group-containing copolymer, in which at least a part of the repeating units derived from the acid and/or acid anhydride in the copolymer (a) and at least a part of epoxy groups in the copolymer (b) are chemically bonded; and (B) 99 to 1 parts by weight of at least one thermoplastic resin, which has high heat resistance and stiffness and is excellent in impact resistance and molding processability with good balance among them.

EP 0 540 986 A1

The present invention relates to a thermoplastic resin composition comprising plural thermoplastic resins and having many good properties.

Thermoplastic resins are used in various fields by making the best use of their properties. Recently, it is found that a mixture of two or more thermoplastic resins has better properties than each of them and many mixtures have been proposed.

Japanese Patent Kokai Publication No. 202139/1985 discloses a thermoplastic resin composition comprising polyglutarimide and diglycidyl $\alpha,\beta$-ethylenically unsaturated carboxylate and having a good balance among heat resistance, impact resistance and weather resistance. However, this composition is still insufficient in impact strength and molding processability.

Japanese Patent Kokai Publication No. 41355/1984 discloses a resin composition comprising polyester and polyglutarimide, which composition has a high heat deformation temperature under high load and is excellent in mechanical strength and melt flowability. This Publication suggests improvement of impact resistance by the addition of an ethylene-glycidyl methacrylate copolymer, but a degree of the improvement of impact resistance is still insufficient.

Japanese Patent Kokai Publication No. 178546/1989 discloses an antistatic resin composition comprising a polyamide elastomer, a polyglutarimide, an epoxy group-containing modified vinyl polymer and a rubber graft copolymer, which composition has permanent antistatic properties, is excellent in balance between mechanical properties and heat resistance and provides a molded article suffering no layer peeling. Though this composition has excellent antistatic properties, its impact resistance is insufficient.

Japanese Patent Kokai publication Nos. 43247/1990 and 43248/1990, corresponding EP-A-354 407 and U.S. Patent No H1004 propose a thermoplastic resin composition comprising a methacrylimide polymer having an acid or acid anhydride functional group and a specific thermoplastic resin and having good heat resistance and mechanical properties. However, this composition has insufficient impact strength.

Japanese Patent Kokai Publication No. 127455/1990 and corresponding EP-A-368 163 discloses a resin composition comprising a methacrylimide base polymer having an acid or acid anhydride functional group, a thermoplastic polyester and a polycarbonate resin and having good mechanical properties and molding processability. This Publication describes that the addition of an ethylene-glycidyl methacrylate copolymer improves impact resistance of the composition. However, the addition of the ethylene-glycidyl methacrylate copolymer deteriorates molding processability of the composition.

Japanese Patent Kokai Publication No. 127456/1990, corresponding EP-A-368 164 and U.S. Patent No. H1042 discloses a thermoplastic resin composition comprising a methacrylimide base polymer and a thermoplastic polyurethane, which composition is excellent in heat resistance, impact resistance and molding processability This Publication describes that the addition of an ethylene-glycidyl methacrylate copolymer improves impact resistance of the composition. However, a degree of improvement of impact resistance is unsatisfactory.

Japanese Patent Kokai Publication No. 132138/1990, corresponding EP-A-366 164 and U.S. Patent No. H1042 discloses a thermoplastic resin composition comprising a methacrylimide-containing polymer and a chlorinated polyolefin, which is excellent in heat resistance, impact resistance and molding processability. This Publication describes that the addition of an ethylene-glycidyl methacrylate copolymer improves impact resistance of the composition. However, a degree of improvement of impact resistance is unsatisfactory.

An object of the present invention is to provide a thermoplastic resin composition which has high heat resistance and stiffness and is excellent in impact resistance and molding processability with good balance among them.

This object has been achieved by a thermoplastic resin composition comprising

(A) 1 to 99 parts by weight of a resin mixture which contains

(a) 1 to 99 % by weight of a glutarimide copolymer comprising 5 to 99.9 % by mole of repeating units derived from glutarimide, 0.1 to 10 % by mole of repeating units derived from an acid and/or acid anhydride and 0 to 94.9 % by mole of repeating units derived from an $\alpha,\beta$-ethylenically unsaturated monomer, and

(b) 99 to 1 % by weight of an epoxy group-containing copolymer,

wherein at least a part of the repeating units derived from the acid and/or acid anhydride in the copolymer (a) and at least a part of epoxy groups in the copolymer (b) are chemically bonded; and

(B) 99 to 1 parts by weight of at least one thermoplastic resin.

The glutarimide repeating unit in the glutarimide copolymer (a) is represented by the formula:

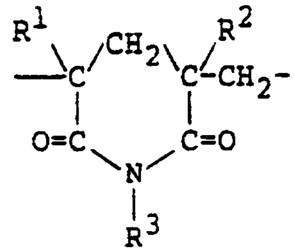

(I)

wherein $R^1$ and $R^2$ are the same or different and each a hydrogen atom or a methyl group, and $R^3$ is a hydrogen atom, a $C_1 - C_{20}$ aliphatic, aromatic or alicyclic hydrocarbon group.

When $R^3$ is a hydrogen atom or a methyl group, the thermoplastic resin composition has excellent heat resistance. When $R^3$ is a cyclohexyl group, the thermoplastic resin composition has low moisture absorption properties.

A content of the glutarimide repeating units in the copolymer (a) is from 5 to 99.9 % by mole, preferably at least 20 % by mole. When the content of the glutarimide repeating units is too small, the thermoplastic resin composition has insufficient heat resistance.

Preferably, the acid and/or acid anhydride repeating units are derived from (meth)acrylic acid or glutaric anhydride. The amount of these repeating units are from 0.1 to 10 % by mole, preferably from 0.5 to 5 % by mole. These repeating units improves the impact resistance of the composition. However, a too large amount of these repeating units will increase moisture absorption of the composition and decrease the molding processability of the composition.

Examples of the $\alpha,\beta$-ethylenically unsaturated monomer in the glutarimide copolymer (a) are (meth)-acrylic acid esters, styrene, $\alpha$-methylstyrene, vinyltoluene, chlorostyrene, acrylonitrile and the like. Examples of the (meth)acrylic acid esters are methyl (meth)acrylate, ethyl (meth)acrylate, propyl (meth)acrylate, n-butyl (meth)acrylate, isobutyl (meth)acrylate, tert.-butyl (meth)acrylate, dodecyl (meth)acrylate, cyclohexyl (meth)acrylate, norbornyl (meth)acrylate, 2-ethylhexyl (meth)acrylate, benzyl (meth)acrylate and the like. These monomers may be used independently or as a mixture of two or more of them.

A content of repeating units derived from the $\alpha,\beta$-ethylenically unsaturated monomer is not larger than 94.4 % by mole in the glutarimide copolymer (a).

The glutarimide copolymer (a) has usually a weight average molecular weight of 40,000 to 500,000, preferably 40,000 to 200,000. When the weight average molecular weight is less than 40,000, the composition has poor mechanical strength. When the weight average molecular weight exceeds 500,000, the composition has decreased molding processability.

The glutarimide copolymer (a) is prepared by any of conventional methods which are described in, for example, Japanese Patent Publication No. 38404/1985 and corresponding U.S. Patent No. 4,246,374 and Japanese Patent Kokai Publication No. 89705/1987.

For example, a homo- or copolymer of (meth)acrylic acid or its ester is heated and molten and then reacted with an imidizing agent. Examples of the imidizing agent are ammonia, methylamine, ethylamine, butylamine, hexylamine, octylamine, nonylamine, decylamine, benzylamine, cyclohexylamine, aniline, halogenated aniline, urea, dimethylurea and the like.

The epoxy group-containing copolymer (b) herein used is intended to mean a copolymer comprising an epoxy group-containing $\alpha,\beta$-ethylenically unsaturated monomer and other $\alpha,\beta$-ethylenically unsaturated monomer.

A composition of monomers of the epoxy group-containing copolymer (b) is not critical. In general, a content of the epoxy group-containing $\alpha,\beta$-ethylenically unsaturated monomer is from 0.1 to 50 % by weight, preferably from 1 to 30 % by weight.

The epoxy group-containing $\alpha,\beta$-ethylenically unsaturated monomer includes unsaturated glycidyl esters of the formula (II) and unsaturated glycidyl ethers of the formula (III):

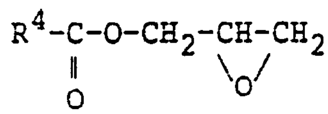

(II)

wherein $R^4$ is a hydrocarbon group having an $\alpha,\beta$-ethylenically unsaturated bond and 2 to 18 carbon atoms,

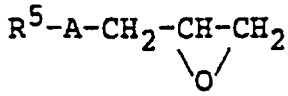

(III)

wherein $R^5$ is a hydrocarbon group having an $\alpha,\beta$-ethylenically unsaturated bond and 2 to 18 carbon atoms and A is an alkylene oxide group having 1 to 6 carbon atom or a phenylene oxide group.

Specific examples of the unsaturated glycidyl ester (II) and the unsaturated glycidyl ether (III) are glycidyl (meth)acrylate, glycidyl itaconate, allyl glycidyl ether, 2-methylallyl glycidyl ether, styrene-p-glycidyl ether, etc.

The other $\alpha,\beta$-ethylenically unsaturated monomers include olefins, vinyl esters of aliphatic carboxylic acids having 2 to 6 carbon atoms, (meth)acrylic acid esters, maleic acid esters, fumaric acid esters, vinyl halides, styrenes, nitriles, vinyl ethers and acrylamides. Specific examples are ethylene, propylene, butene-1, vinyl acetate, methyl (meth)acrylate, ethyl (meth)acrylate, dimethyl maleate, diethyl fumarate, vinyl chloride, vinylidene chloride, styrene, acrylonitrile, isobutyl vinyl ether, acrylamide and the like. Among them, combinations of two or more of them, for example, ethylene-vinyl acetate, ethylene-methyl acrylate and the like are preferred in order to lower a glass transition temperature of the copolymer (b) and improve impact resistance at low temperature.

A typical example of the epoxy group-containing copolymer is an ethylene-glycidyl methacrylate copolymer.

The epoxy group-containing copolymer (b) may be prepared by any of conventional methods. For example, the epoxy group-containing $\alpha,\beta$-ethylenically unsaturated monomer and the other $\alpha,\beta$-ethylenically unsaturated monomer are bulk polymerized or radically polymerized in an inert solvent to prepare a random copolymer, or the epoxy group-containing $\alpha,\beta$-ethylenically unsaturated monomer is impregnated in a polymer of the other $\alpha,\beta$-ethylenically unsaturated monomer and radically polymerized to prepare a graft copolymer.

Specifically, according to a method of the production of high pressure polyethylene, ethylene and the epoxy group-containing $\alpha,\beta$-ethylenically unsaturated monomer are copolymerized in the presence of a radical generating agent under pressure of 500 to 4000 Atm. at a temperature of 100 to 300° C. In an extruder, molten polypropylene, the epoxy group-containing $\alpha,\beta$-ethylenically unsaturated monomer and the radical generating agent are kneaded and the monomer is graft copolymerized to polypropylene.

The chemical bonds between "at least a part of the repeating units derived from the acid and/or acid anhydride in the copolymer (a)" and "at least a part of epoxy groups in the copolymer (b)" are formed by a reaction between an epoxy group and a carboxylic acid or anhydride group. This reaction takes place when the copolymer (a) and the copolymer (b) are heated and intimately mixed. For example, the two copolymers are dissolved in a solvent, mixed and then heated, or kneaded in molten states.

The molten copolymers (a) and (b) are kneaded with a single or twin screw extruder, a Banbury mixer or a kneader at a temperature of 150 to 350° C, preferably 180 to 300° C at a residence time of 0.3 to 10 minutes, preferably 0.5 to 5 minutes.

As the content of the copolymer (a) in the resin mixture (A) increases, heat resistance and stiffness of the composition increase, while as the content of the copolymer (b) in the resin mixture (A) increases, the impact resistance of the composition increases.

Examples of the thermoplastic resin (B) are polyethylene, polypropylene, polyvinyl chloride, polystyrene, polymethyl methacrylate, styrene-acrylonitrile copolymer, sytrene-methyl methacryalte copolymer, styrene-methyl methacrylate-acrylonitrile copolymer, $\alpha$-methylstyrene-acrylonitrile-methyl methacrylate copolymer, ABS resin, AAS resin, AES resin, MBS resin, polyurethane, polyamide, polyacetal, polycarbonate, PPE, PBT, PET, PPS, PEEK, and the like.

As the content of the resin mixture (A) in the thermoplastic resin composition increases, heat resistance, impact resistance and stiffness of the composition increase, while as the content of the thermoplastic resin (B) increases, the properties of the resin (B) appear significantly.

The thermoplastic resin composition of the present invention can be prepared by any of conventional methods for compounding plural resins. For example, solutions of the polymers (A) and (B) are mixed and the solvent is evaporated off or the mixed solution is poured in a non-solvent to precipitated the polymer mixture, or the polymers in a molten state are kneaded. For melt kneading, a conventionally used kneader such as single or twin screw extruder or a Banbury mixture is used. Alternatively, the polymers are directly

kneaded during melt processing in injection molding or extrusion molding.

To the thermoplastic resin composition of the present invention, various known additives such as antioxidants (e.g. hindered phenol antioxidants, phosphorus antioxidants, sulfur antioxidants, etc.), weather-resisting agents (e.g. UV light absorbers, hindered amine base light-stabilizers, etc.), lubricants, antistatic agents, flame retardants, colorants, pigments and the like may be added. In some applications, reinforcing fibers such as glass fiber or inorganic fillers may be added.

The thermoplastic resin composition of the present invention is excellent in balance among the heat resistance, the impact resistance and the stiffness which is represented by a flexural modulus and also molding processability, and useful as a material of parts of electrical apparatuses, automobile parts such as interior or exterior panels, general merchandise goods, and the like by making the best use of such properties.

The present invention will be explained further in detail by following Examples.

In Examples, following measurement methods are used.

Heat deformation temperature (°C)

A heat deformation temperature is measured according to ASTM D 648 under a load of 18.6 $kg/cm^2$.

Impact strength (kgf.cm/cm)

Notched Izod impact strength is measured according to ASTM D 256.

Flexural modulus ($kgf/cm^2$)

Flexural modulus is measured according to ASTM D 790.

Melt flow index (g/10 min.)

A melt flow index is measured according to ASTM D 1238 at 230°C under a load of 3.8 $kg/cm^2$.

The thermoplastic resins used in Examples are as follows:

ABS Resin: Clarastick MV (Manufactured by Sumitomo Dow Limited)
Polyamide: Polyamide 6 (UBE Nylon 1013 B manufactured by Ube Kosan Co., Ltd.)
Polycarbonate: Upilon S-2000 (manufactured by Mitsubishi Gas Chemical Co., Ltd.)
P-MMA: Sumipex-B MHO (manufactured by Sumitomo Chemical Co., Ltd.)
PBT Resin: TORAY PBT 1401-X06 (manufactured by Toray Co., Ltd.)

Reference Example

Preparation of a resin mixture (A)

A glutarimide copolymer (KAMAX T-150 manufactured by Rohm and Hass Co., a content of glutarimide repeating units: 75 % by mole and an acid value: 5 % by mole) (80 parts by weight) and an epoxy group-containing copolymer which was prepared by the method described in Japanese Patent Kokai Publication No. 23490/ 1972 and corresponding G.B. Patent No. 1,352,088, the disclosure of which is hereby incorporated be reference, contained 83 % by weight of ethylene, 5 % by weight of vinyl acetate and 12 % by weight of glycidyl methacrylate and had a melt index (MI) of 7 (2.16 kg, 190°C, 10 minutes) (20 parts by weight) were compounded and extruded from a single screw extruder while melt kneading them at 250°C to produce pellets of the resin mixture (A).

Comparative Reference Example

Preparation of a comparative resin mixture

In the same manner as in Reference Example except that a glutarimide copolymer (KAMAX T-240 manufactured by Rohm and Haas Co., a content of glutarimide repeating units: 75 % by mole and an acid value of 0 % by mole) was used in place of KAMAX T-150, pellets of a resin mixture was produced.

Examples 1 – 5

The resin mixture (A) prepared in Reference Example and a thermoplastic resin in the Table were compounded in amounts shown in the Table and extruded from a twin screw extruder at a resin temperature of 250 ° C to produce pellets of the resin composition.

A test sample was prepared from the pellets by means of an injection molding machine at a cylinder temperature of 260 ° C and a mold temperature of 60 ° C, and its physical properties were measured.

The results are shown in the Table.

Comparative Example 1

In the same manner as in Example 5 except that the comparative resin mixture prepared in Comparative Reference Example was used in place of the resin mixture (A), a test sample was prepared and its physical properties were measured.

The results are shown in the Table.

Comparative Example 2

In the same manner as in Example 5 except that the same glutarimide copolymer as used in Reference Example (20 parts by weight), the same epoxy group – containing copolymer as used in Reference Example (5 parts) and the same thermoplastic resins used in Example 5 were used, a test sample was prepared and its physical properties were measured.

The results are shown in the Table.

Table

| Example No. | Resin mixture (A) (pbw) | Thermoplastic resin Kind | Thermoplastic resin Amount (pbw) | Melt flow index (g/10 min) | Heat deformation temp. (°C) | Izod impact strength (kgf.cm/cm) | Flexural modulus ($kgf/cm^2$) |
|---|---|---|---|---|---|---|---|
| 1 | 25 | Polycarbonate | 80 | 0.9 | 125 | 50 | 22100 |
| 2 | 25 | Polyamide | 80 | 19.5 | 63 | 8 | 20100 |
| 3 | 25 | P-MMA | 80 | 1.3 | 84 | 3 | 29100 |
| 4 | 25 | PBT Resin | 80 | 11.3 | 63 | 6 | 23900 |
| 5 | 25 | Polyamide<br>ABS Resin | 80 | 1.6 | 74 | 12 | 17300 |
| Comp. 1 | 25 | Polyamide<br>ABS Resin | 40<br>40 | 3.0 | 75 | 6 | 17700 |
| Comp. 2 | 25 | Polyamide<br>ABS Resin | 40<br>40 | 0.9 | 71 | 20 | 19300 |

## Claims

**1.** A thermoplastic resin composition comprising

(A) 1 to 99 parts by weight of a resin mixture which contains

(a) 1 to 99 % by weight of a glutarimide copolymer comprising 5 to 99.9 % by mole of repeating units derived from glutarimide, 0.1 to 10 % by mole of repeating units derived from an acid and/or acid anhydride and 0 to 94.9 % by mole of repeating units-derived from an $\alpha,\beta$-ethylenically unsaturated monomer, and

(b) 99 to 1 % by weight of an epoxy group-containing copolymer,

wherein at least a part of the repeating units derived from the acid and/or acid anhydride in the copolymer (a) and at least a part of epoxy groups in the copolymer (b) are chemically bonded; and

(B) 99 to 1 parts by weight of at least one thermoplastic resin.

**2.** The thermoplastic resin composition according to claim 1, wherein said repeating unit derived from glutarimide in said glutarimide copolymer (a) is represented by the formula (I)

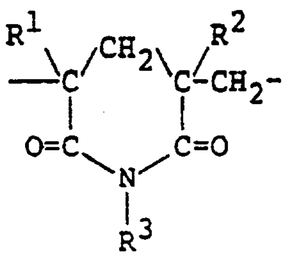

(I)

wherein $R^1$ and $R^2$ are the same or different and each a hydrogen atom or a methyl group, and $R^3$ is a hydrogen atom, a $C_1-C_{20}$ aliphatic, aromatic or alicyclic hydrocarbon group.

**3.** The thermoplastic resin composition according to claim 1 or 2, wherein the amount of said repeating units derived from glutarimide is from 20 to 99.9 % by mole based on the copolymer (a).

**4.** The thermoplastic resin composition according to any of claims 1 to 3 wherein the amount of said repeating units derived from the acid and/or anhydride is from 0.5 to 5 % by weight based on the copolymer (a).

**5.** The thermoplastic resin composition according to any of claims 1 to 4, wherein said epoxy group-containing copolymer (b) is a copolymer comprising 0.1 to 50 % by weight of said repeating units derived from an epoxy group-containing $\alpha,\beta$-ethylenically unsaturated monomer and 50 to 99.9 % by weight of repeating units derived from other $\alpha,\beta$-ethylenically unsaturated monomer.

**6.** The thermoplastic resin composition according to claim 5, wherein said epoxy group-containing $\alpha,\beta$-ethylenically unsaturated monomer is at least one monomer selected from glycidyl (meth)acrylate, glycidyl itaconate, allyl glycidyl ether, 2-methylallyl glycidyl ether and styrene-p-glycidyl ether.

European Patent Office

# EUROPEAN SEARCH REPORT

Application Number

EP 92 11 8349

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E,X | EP-A-0 464 560 (SUMITOMO CHEM. COMP. LMT)<br>* examples 1-7 *<br>--- | 1 | C 08 L 33/24<br>C 08 L 63/00<br>C 08 L 87/00 //<br>(C 08 L 33/24<br>C 08 L 63:00<br>C 08 L 101:00 )<br>(C 08 L 87/00<br>C 08 L 101:00 ) |
| E,X | EP-A-0 464 561 (SUMITOMO CHEM. COMP. LMT)<br>* examples 1-13 *<br>----- | 1 | |
| | | | **TECHNICAL FIELDS SEARCHED (Int. Cl.5)** |
| | | | C 08 L |

The present search report has been drawn up for all claims

| Place of search | Date of completion of the search | Examiner |
|---|---|---|
| THE HAGUE | 01-02-1993 | SCHUELER D H H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document